# EUROPÄISCHE PATENTSCHRIFT

(11) **EP 0 485 554 B1**
(45) Veröffentlichungstag und Bekanntmachung des Hinweises auf die Patenterteilung: **21.06.1995**
(21) Anmeldenummer: 91909647.9
(22) Anmeldetag: 24.05.1991
(51) Int. Cl.: F02B 29/04, F02B 37/00

(54) **ANSAUGANLAGE FÜR EINE BRENNKRAFTMASCHINE ZUR VERWENDUNG BEI EIN- ODER ZWEISTUFIGER AUFLADUNG**
INTERNAL COMBUSTION ENGINE ASPIRATION SYSTEM FOR USE WITH SINGLE-STAGE OR TWO-STAGE SUPERCHARGERS
DISPOSITIF D'ADMISSION POUR MOTEUR A COMBUSTION INTERNE POUR L'UTILISATION EN REGIME DE SURALIMENTATION SIMPLE EFFET OU DOUBLE EFFET

(30) Priorität: 02.06.1990 DE 4017823
(43) Veröffentlichungstag der Anmeldung: 20.05.1992
(73) Patentinhaber: MTU MOTOREN- UND TURBINEN-UNION FRIEDRICHSHAFEN GMBH, D-88040 Friedrichshafen (DE)
(72) Erfinder: SUDMANNS, Hans, D-7990 Friedrichshafen 1 (DE); SCHIER, Karl, D-7990 Friedrichshafen 1 (DE)
(86) Internationale Anmeldenummer: DE9100431
(87) Internationale Veröffentlichungsnummer: WO9119086

(56) Entgegenhaltungen:
- DE-A- 2 059 220
- DE-A- 3 633 405
- GB-A- 2 069 593
- US-A- 2 739 440
- PATENT ABSTRACTS OF JAPAN vol. 9, no. 249 (M-419)(1972) 05 Oktober 1985, & JP-A-60 101223 (YANMAR DIESEL K.K.) 05 Juni 1985

## Beschreibung

Die Erfindung betrifft eine Serie von Ansauganlagen für ein- oder zweistufig aufgeladene Brennkraftmaschinen, durch welche die angesaugte Verbrennungsluft über die Verdichter der Abgasturbolader und die zwischengeschalteten Ladeluftkühler zum Luftsammelgehäuse der Brennkraftmaschine und schließlich von dort zu den Einlaßkanälen der Zylinderköpfe der Brennkraftmaschine geleitet wird.

Eine derartige Ansauganlage ist beispielsweise aus der DE-OS 20 59 220 bekannt. Bei dieser Brennkraftmaschine mit V-förmiger Anordnung der Zylinder in zwei Reihen ist zur einstufigen Aufladung jeder Zylinderreihe ein Abgasturbolader zugeordnet. Die von den Verdichtern verdichtete Verbrennungsluft gelangt in längs der Brennkraftmaschine verlaufende Sammelleitungen, in denen die Ladeluftkühler integriert sind. Durch Hintereinanderschaltung mehrerer blockförmiger Wärmetauscherelemente soll eine niedrige Bauhöhe der Sammelleitungen erzielt werden. Es wird jedoch nicht aufgezeigt, wie eine bauraumsparende Anordnung einer Ansauganlage mit Abgasturboladern, Ladeluftkühlern und Sammelgehäuse zu gestalten ist, wenn die Brennkraftmaschine mit möglichst wenig Bauaufwand in eine zweistufig aufgeladene Brennkraftmaschine verändert werden soll.

Der Erfindung liegt die Aufgabe zugrunde, Ansauganlagen aufzuzeigen, die sich unter Einsatz nur weniger unterschiedlicher Bauteile sowohl für ein- als auch für zweistufige Aufladung verwenden lassen, und dadurch logistische Vorteile bieten, die es darüberhinaus erlauben, die Abmessungen der Motorvarianten und die Montage der Ansauganlagen weitgehend zu vereinheitlichen, und die auch hinsichtlich der Strömungsführung günstig sind.

Diese Aufgabe wird bei einer Ausführung der Ansauganlagen nach den Merkmalen des Anspruchs 1 erzielt. Danach werden Abgasturbolader, Ladeluftkühler und Luftsammelgehäuse, sowie die Leitungen zu den Einlaßkanälen der Zylinderköpfe in der gleichen Anordnung wie bei einstufiger Aufladung auch bei zweistufiger Aufladung verwendet. Natürlich muß bei zweistufiger Aufladung ein Niederdruckladeluftkühler hinzugefügt werden. An der Stelle des bei einstufiger Aufladung verwendeten Ladeluftkühlers ist der Hochdruckladeluftkühler angeordnet. Und an der Stelle der bei einstufiger Aufladung verwendeten Abgasturbolader sind die Hochdruckabgasturbolader angeordnet. Das bei einstufiger Aufladung das Ansauggehäuse mit dem Ansaugtrichter bildende Strömungsgehäuse und das bei zweistufiger Aufladung die Kühlelemente des Niederdruckladeluftkühlers einschließende Gehäuse sind jeweils mit einem identischen Unterteil ausgebildet, das bei ein- und zweistufiger Aufladung am gleichen Ort angeordnet wird. Diese Vereinheitlichung führt zu logistischen Vorteilen mit entsprechender Kostenreduzierung. Die Montage wird vereinfacht und der Bauraumbedarf bei ein- und zweistufiger Aufladung ähnlich. Die Ansauganlage ist ferner von der Strömungsführung her günstig. Ein besonders geringer Bauraumbedarf und eine optimale Strömungsführung, mit guter Verteilung der Strömung zu den Zylindern ergibt sich, wenn in besonders zweckmäßiger Ausgestaltung nach Anspruch 2 sich das Luftsammelgehäuse zwischen V-förmig angeordneten Zylinderreihen längs der Brennkraftmaschine erstreckt und auf der Oberseite des Luftsammelgehäuses Anlagenteile angeordnet werden können. Im Falle der einstufigen Aufladung ist ein Ansaugtrichter und ein Ladeluftkühler nebeneinander auf dem Luftsammelgehäuse angeordnet. Im Falle der zweistufigen Aufladung ist ein Hochdruck- und ein Niederdruckladeluftkühler nebeneinander auf dem Luftsammelgehäuse angeordnet. Die Anordnung der Abgasturbolader auf einer Schmalseite des Luftsammelgehäuses, wobei das Unterteil mit den Anschlußstutzen den Einlässen der Verdichter unmittelbar gegenüberliegt, nach Anspruch 3 verringert den Bauraumbedarf weiter und ist besonders günstig hinsichtlich der Strömungsführung. Bei der Ansauganlage nach Anspruch 4 ist die obere Wandbegrenzung des Luftsammelgehäuses wannenförmig ausgebildet, so daß sich ein Strömungsraum bildet, über den die Luft zu dem angeformten Anschlußstutzen gelangt, die mit den Ansaugstutzen der Verdichter verbunden sind. Bei Registeraufladung ist üblicherweise jeder Zylinderreihe ein Abgasturbolader oder bei zweistufiger Aufladung eine Abgasturboladergruppe Zugeordnet. Bei Teillast, wenn eine geringe Abgasmenge zur Verfügung steht, wird das von beiden Zylinderreihen ausgestoßene Abgas zum Antrieb nur eines Laders oder einer Abgasturboladergruppe verwendet. Die zur Turbine führende Abgasleitung und die zum Verdichter führende Ansaugleitung eines entsprechenden Abgasturboladers sind deshalb nach dem Unteranspruch 5 mit Absperreinrichtungen versehen, die zur Abschaltung des Abgasturboladers betätigt werden. Bei einstufiger Aufladung wird die verdichterseitige Absperreinrichtung vorteilhafterweise am Eingang des Ansaugtrichters angeordnet, da sie dort gut zugänglich für Wartungsarbeiten ist. Bei dieser Anordnung der Absperreinrichtung müssen die Strömungskanäle innerhalb des Ansaugtrichters getrennt sein. Es ist deshalb im Ansaugtrichter eine Querwand vorgesehen, die zusammen mit Stegen im wannenförmig ausgebildeten Unterteil separate Ansaugkanäle für die beiden Ansaugstutzen der Verdichter bilden. Bei zweistufiger Aufladung mit zwei den beiden Zylinderreihen zugeordneten Abgasturboladergruppen mit Abschaltung einer Abgasturboladergruppe bei Teillast ist es ebenfalls notwendig, die Ansaugkanäle im Zwischenkühler nach Anspruch 6 zu trennen. Es werden deshalb zwei separate Wärmetauscherelemente verwendet, die durch eine Querwand im Gehäuse getrennt sind. Diese Querwand bildet zusammen mit den Stegen im wannenförmigen darunterliegenden Strömungsraum separate Strömungskanäle für die jeweils jeder Zylinderreihe zugeordneten Abgasturbolader. Der am Luftsammelgehäuse angeformte wannenförmige Strömungsraum mit Stegen für getrennte Strömungskanäle kann also bei ein- und zweistufiger Aufladung auch bei Registeraufladung unverändert beibehalten werden. Für eine bauraumsparende Bauweise ist im weiteren das Gehäuse des Ladeluftkühlers als Deckel für das Luftsammelgehäuse ausgebildet. Die Ladeluft wird in die Gehäuse der Ladeluftkühler über seitliche obenliegende Einlässe eingeleitet.

Ein Ausführungsbeispiel der Erfindung ist in den Zeichnungen dargestellt und wird im folgenden näher beschrieben; es zeigen:
- Fig. 1: eine Längsansicht einer Brennkraftmaschine und der Ansauganlage für einstufige Aufladung,
- Fig. 2: eine Draufsicht auf eine Brennkraftmaschine und die Ansauganlage für einstufige Aufladung,
- Fig. 3: eine Längsansicht einer Brennkraftmaschine und der Ansauganalge für zweistufige Aufladung,
- Fig. 4: eine Draufsicht auf eine Brennkraftmaschine und die Ansauganlage für zweistufige Aufladung,
- Fig. 5: einen Querschnitt durch eine Brennkraftmaschine entlang der in Figur 3 eingetragenen Schnittlinie V-V.

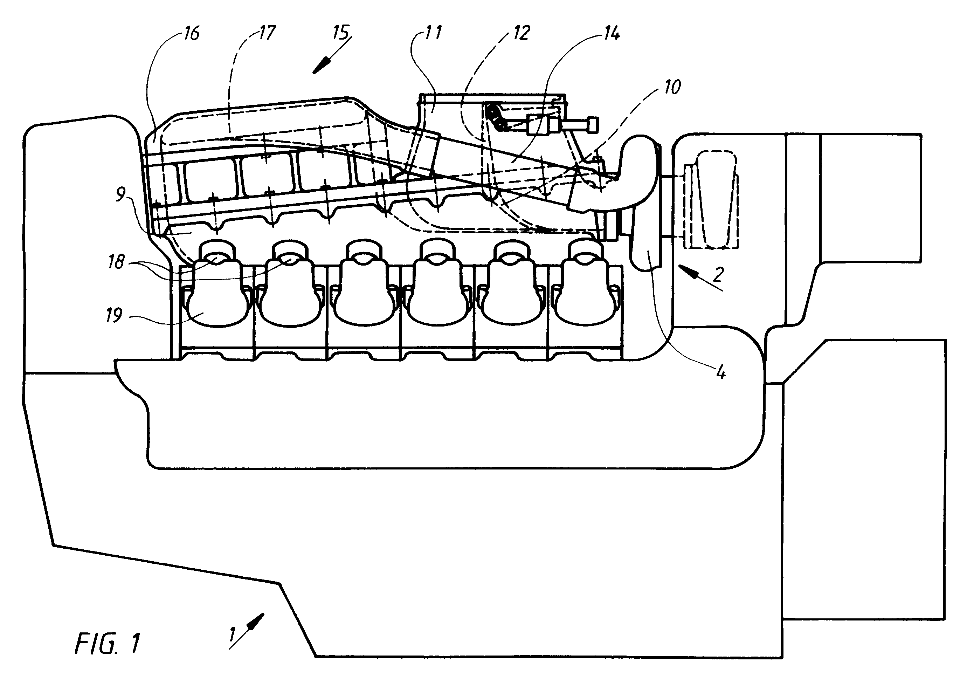

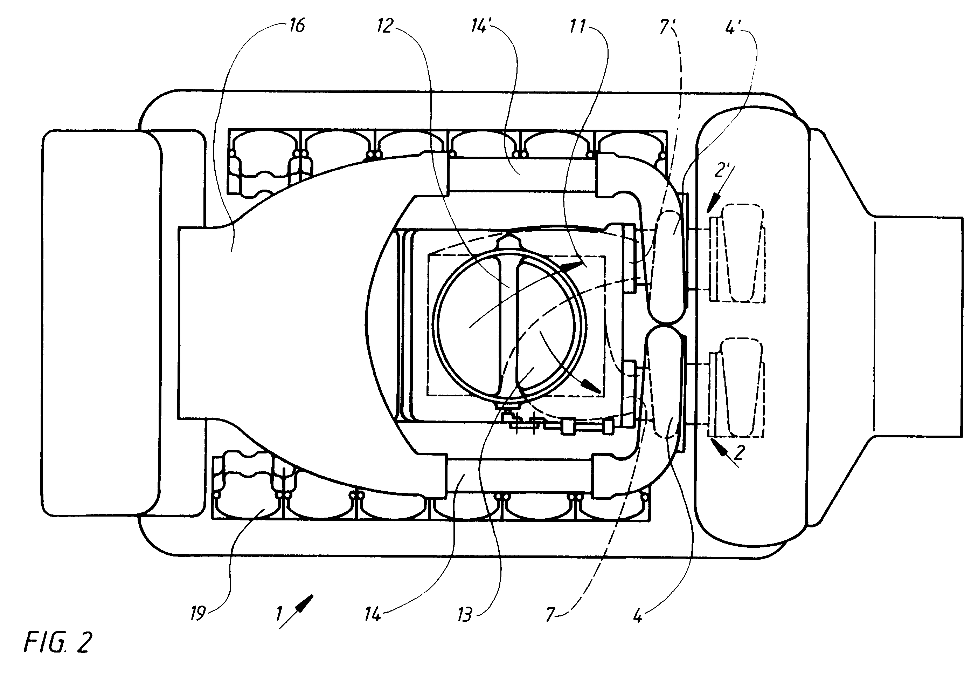

Die in den Figuren 1 und 2 in einer Längsansicht und in der Draufsicht dargestellte Brennkraftmaschine 1 mit Ansauganlage ist einstufig aufgeladen. Dabei ist jeweils jeder der beiden V-förmig angeordneten Zylinderreihen ein Abgasturbolader 2, 2' zugeordnet, von denen einer mit Absperreinrichtungen zum Abschalten bei Teillast ausgebildet ist. Die beiden Verdichter 4, 4' der beiden Abgasturbolader 2, 2' beziehen die Verbrennungsluft über Anschlußstutzen 7, 7', die am Luftsammelgehäuse 9 angeformt sind. Die Anschlußstutzen 7, 7' stehen mit separaten Strömungskanälen in Verbindung, die aus einem wannenförmigen, ebenfalls am Luftsammelgehäuse 9 angeformten Unterteil und dem daraufgesetzten Ansaugtrichter 11 gebildet werden. Das Unterteil könnte natürlich auch, wie jedoch nicht dargestellt, als separates, nicht am Luftsammelgehäuse 9 angeformtes Bauteil ausgeführt sein, das auf dem Luftsammelgehäuse 9 aufgesetzt wird. Im Ansaugtrichter 11 verläuft eine Querwand 12 die zusammen mit Stegen 10 im wannenförmigen Unterteil getrennte Ansaugwege für die Verdichter der Abgasturbolader bilden. Einer der beiden Strömungswege ist durch die als Klappe ausgebildete Absperreinrichtung 13 im Einlauf des Ansaugtrichters 11 absperrbar. In dieser Anordnung ist die Klappe beispielsweise für Wartungsarbeiten leicht zugänglich. Die Anordnung der Verdichter 4, 4' unmittelbar an der Schmalseite des Luftsammelgehäuses 9 mit zum Luftsammelgehäuse 9 hin ausgerichteten Ansaugstutzen gewährleistet eine optimale Luftführung mit kurzen Strömungswegen. Die verdichtete Luft gelangt über die Leitungen 14, 14' zum Ladeluftkühler 15, dessen Gehäuse 16 einen Deckel für das darunterliegende Luftsammelgehäuse 9 bildet. Das Gehäuse 16 des Ladeluftkühlers 15 liegt unmittelbar neben dem Ansauggehäuse mit dem Ansaugtrichter 11. Die Ladeluft strömt über seitliche Öffnungen 17 in das Gehäuse 16 des Ladeluftkühlers 15 und über die Wärmetauscherelemente des Ladeluftkühlers 15 in das beiden Zylinderreihen gemeinsame Luftsammelgehäuse 9. Das Luftsammelgehäuse 9 ist über separate Anschlußstutzen 18 mit den Einlaßkanälen der Zylinderköpfe 19 verbunden. Letzteres hat den Vorteil, daS die Zylinderköpfe 19 abnehmbar sind, ohne daß die gesamte Ansauganlage abgebaut werden muß. Außerdem können die Anschlußstutzen 18 für unterschiedliche Zuström- und Anschlußbedingungen (z. B. Zwei- oder Vierventilkopf) der Zylinderköpfe 19 leicht geändert werden, ohne daß Änderungen des Luftsammelgehäuses nötig wären.

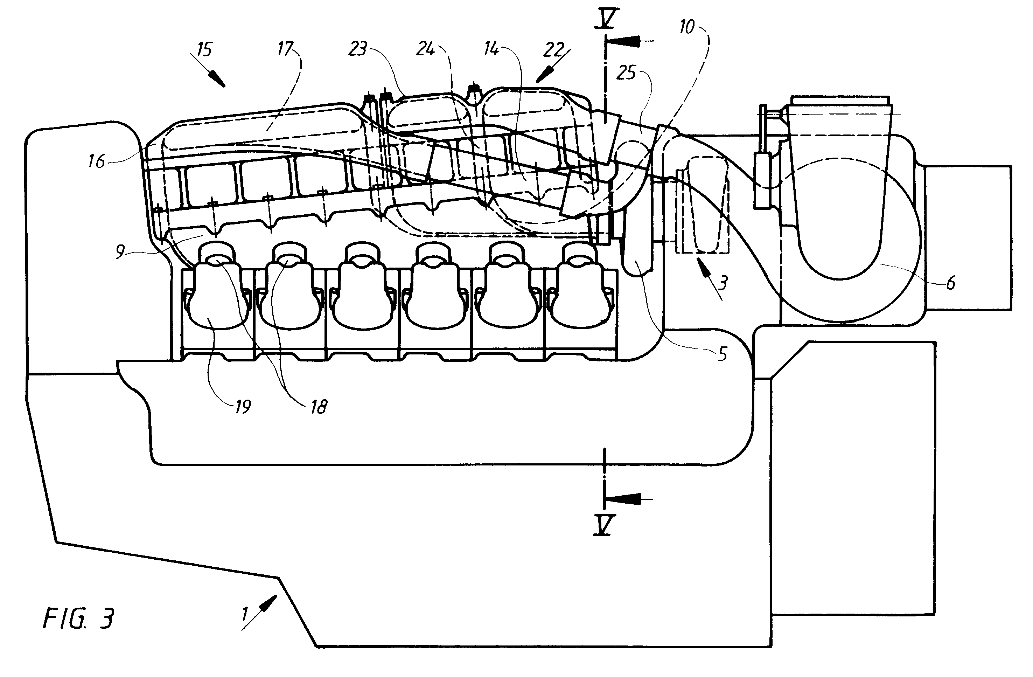

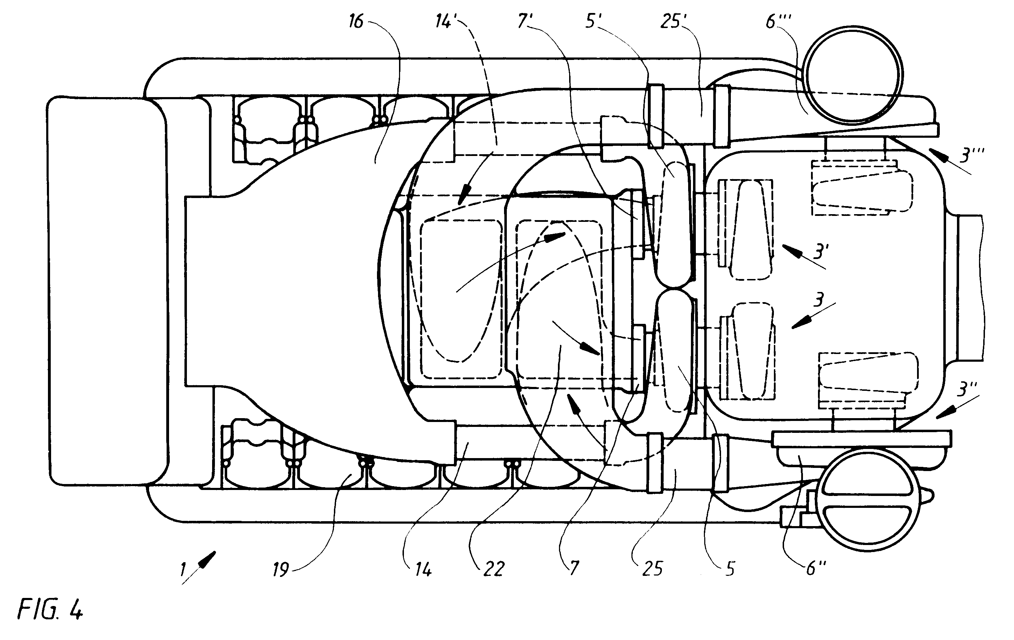

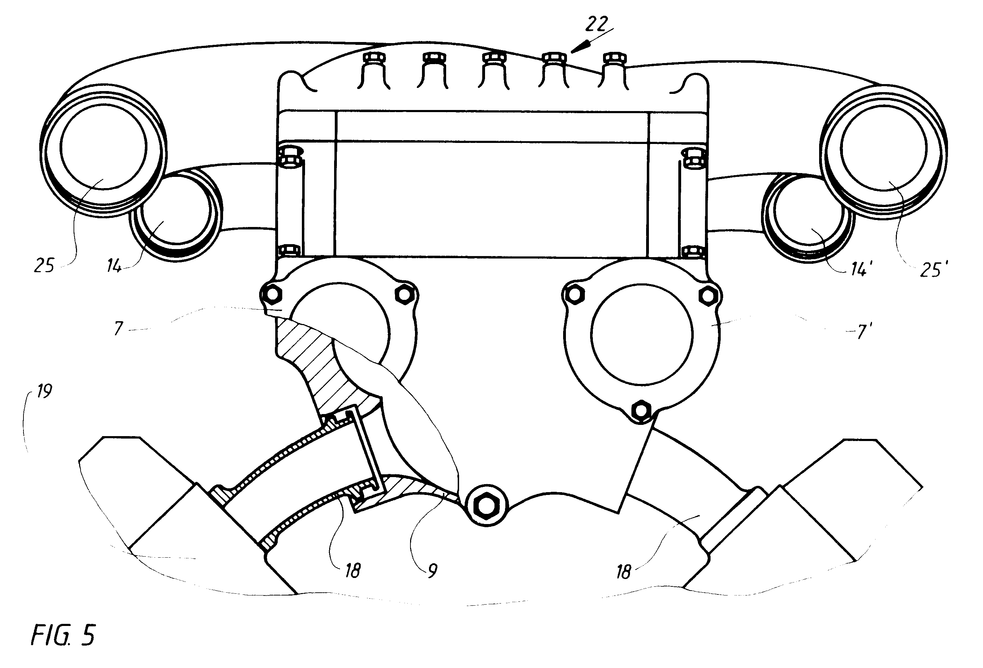

In den Figuren 3 bis 5 ist eine Brennkraftmaschine und die Ausbildung der Ansauganlage bei zweistufiger Aufladung in einer Längsansicht und einer Draufsicht sowie einem Querschnitt dargestellt. Die Umgebungsluft wird über die Ansaugstutzen der Niederdruckverdichter 6'', 6''' der Niederdruckabgasturbolader 3'', 3''' aus der Atmosphäre angesaugt. Zur Abschaltung einer Abgasturboladergruppe ist der Einlauf eines Ansaugstutzens mit einer Absperreinrichtung versehen. Die von den Niederdruckverdichtern 6'', 6''' vorverdichtete Ladeluft gelangt über die Leitungen 25, 25' zum Niederdruckladeluftkühler 22, der anstelle des bei einstufiger Aufladung verwendeten Ansaugtrichters 11 auf das am Luftsammelgehäuse 9 angeformte wannenförmige Unterteil aufgesetzt ist. Das Unterteil könnte natürlich auch hier, wie jedoch nicht dargestellt, als separates, auf das Luftsammelgehäuse aufsetzbares Bauteil ausgeführt sein. Das Gehäuse 23 des Niederdruckladeluftkühlers 22 besitzt eine Querwand 24 die in Verbindung mit den Stegen 10 im wannenförmigen Unterteil separate Strömungswege bildet. Als Kühlerelemente dienen zwei separate Wärmetauscherelemente. Die getrennte Luftführung für die beiden Abgasturboladergruppen 3, 3'' und 3', 3''' ist nötig, damit bei Betrieb nur einer Abgasturboladergruppe das Hochdrucksystem vom Niederdrucksystem getrennt ist. Ansonsten stellt sich eine Kurzschlußströmung über den Hochdruckverdichter des stehenden Laders zum Niederdruckverdichter ein. Nach der Erfindung werden die Hochdruckverdichter 5, 5' der Hochdruckabgasturbolader 3, 3' mit ihren Ansaugstutzen an derselben Stelle angeordnet, wie die Verdichter 4, 4' der Abgasturbolader 2, 2' bei einstufiger Aufladung. So können die zu den Ansaugstutzen der Verdichter 4, 4' bzw. Hochdruckverdichter 5, 5' führenden Anschlußstutzen 7, 7' die am Luftsammelgehäuse 9 angeformt sind, sowie die zum Ladeluftkühler 15 führenden Leitungen 14, 14' und Anschlüsse und Befestigungen bei ein- und zweistufiger Aufladung gleich ausgeführt und angeordnet sein. Insbesondere kann das Luftsammelgehäuse 9 mit dem wannenförmigen Unterteil und die daran angeformten Anschlußstutzen 7, 7' in unveränderter Weise bei ein- und zweistufiger Aufladung verwendet werden.

Die von den Hochdruckverdichtern 5, 5' verdichtete Ladeluft gelangt über die Leitungen 14, 14', die ebenfalls in gleicher Weise angeordnet sind wie bei einstufiger Aufladung, zum Ladeluftkühler 15, der nunmehr als Hochdruckladeluftkühler dient. Das Gehäuse 16 des Ladeluftkühlers 15 liegt unmittelbar neben dem Gehäuse 23 des Niederdruckladeluftkühlers 22 auf dem Luftsammelgehäuse 9. Mit der erfindungsgemäßen Ansauganlage kann eine Brennkraftmaschine somit unter Zugrundelegung einer minimalen Anzahl unterschiedlicher Bauteile für ein- oder zweistufige Aufladung ausgerüstet werden. Es müssen im Grunde lediglich anstelle des Ansaugtrichters 11 ein Niederdruckladeluftkühler 22 installiert werden und zusätzliche Abgasturbolader mit den Zuleitungen 25, 25', über die die vorverdichtete Ladeluft zu seitlichen Einlaßöffnungen des Zwischenkühlers 22 gelangt. Die anderen Teile einschließlich der Hochdruckgruppen können in gleicher Anordnung bei beiden Motorvarianten angebaut werden. Es ist klar, daß sich hieraus Kostenvorteile ergeben, da eine minimale Anzahl unterschiedlicher Teile gefertigt und bereitgehalten werden muß. Die Anordnung der Ansauganlage zwischen den Zylinderreihen mit den daraufsitzenden Ladeluftkühlern und die Anordnung der Ladeluftkühler im Anschluß an eine Schmalseite des Luftsammelgehäuses gewährleisten eine optimale Strömungsführung aufgrund kurzer Leitungsverbindungen mit wenigen Umleitungen und eine gute Verteilung der Strömung zu den einzelnen Zylindern.

## Patentansprüche

1. Serie von Ansauganlagen für eine Brennkraftmaschine (1) zur Verwendung bei ein- oder zweistufiger Aufladung,
1.1 mit wenigstens einem Abgasturbolader (2, 2'), einem Ladeluftkühler (15) und einem Luftsammelgehäuse (9), sowie Leitungen zwischen den Anlagenteilen und zu den Einlaßkanälen der Zylinderköpfe (19),
2. wobei das Luftsammelgehäuse (9), sowie die Leitungen zwischen den Anlagenteilen bei zweistufiger Aufladung in gleicher Anordnung wie bei einstufiger Aufladung verwendet werden,
3. und wobei bei zweistufiger Aufladung an der Stelle der bei einstufiger Aufladung verwendeten Abgasturbolader (2, 2') die Hochdruckabgasturbolader (3, 3') angeordnet sind,
3.1 und wobei bei zweistufiger Aufladung Niederdruckabgasturbolader (3'', 3''') hinzugefügt werden,
4. und wobei bei zweistufiger Aufladung an der Stelle des bei einstufiger Aufladung verwendeten Ladeluftkühlers (15) der Hochdruckladeluftkühler angeordnet ist,
5. und wobei bei zweistufiger Aufladung ein Niederdruckladeluftkühler (22) hinzugefügt wird,
5.1 wobei das bei einstufiger Aufladung das Ansauggehäuse mit dem Ansaugtrichter (11) bildende Strömungsgehäuse und das bei zweistufiger Aufladung die Kühlelemente des Niederdruckladeluftkühlers (22) einschließende Gehäuse mit jeweils einem identischen Unterteil ausgebildet sind,
5.2 auf das bei einstufiger Aufladung ein Oberteil mit dem Ansaugtrichter (11),
5.3 und bei zweistufiger Aufladung ein Deckel mit Anschlüssen zum Zuführen der Ladeluft zu den Kühlelementen im Innern des Gehäuses aufsetzbar ist,
5.4 wobei das Unterteil die Anschlußstutzen (7, 7') zum Ableiten der Ladeluft zu den Verdichtern (4, 4' bzw. 5. 5') der Abgasturbolader (2, 2' bzw. 3. 3') aufweist,
5.5 und wobei das Unterteil bei ein- und zweistufiger Aufladung am gleichen Ort angeordnet ist.

2. 1. Serie von Ansauganlagen nach Anspruch 1, wobei
2. sich das Luftsammelgehäuse (9) zwischen zwei V-förmig angeordneten Zylinderreihen längs der Brennkraftmaschine (1) erstreckt,
3. und auf der Oberseite des Luftsammelgehäuses (9) bei einstufiger Aufladung nebeneinander der Ladeluftkühler (15) und das Strömungsgehäuse mit dem Ansaugtrichter (11),
3.1 und bei zweistufiger Aufladung nebeneinander die Ladeluftkühler (15 und 22) angeordnet sind.

3. 1. Serie von Ansauganlagen nach Anspruch 2,
2. wobei die Abgasturbolader (2, 2') bzw. die Hochdruckabgasturbolader (3, 3') auf einer Schmalseite des Luftsammelgehäuses (9), und
3. das Unterteil des Ansauggehäuses mit dem Ansaugtrichter (11) bzw. des Niederdruckladeluftkühlers (22) mit seinen Anschlußstutzen (7, 7') unmittelbar den Einlässen der Verdichter (4, 4' bzw. 5, 5') der Abgasturbolader (2, 2' bzw. 3, 3') gegenüber angeordnet sind.

4. 1. Serie von Ansauganlagen nach Anspruch 1, 2 oder 3, wobei
2. das Unterteil des das Ansauggehäuse bildenden Strömungsgehäuses bzw. das Unterteil für das Gehäuse des Niederdruckladeluftkühlers (22) am Luftsammelgehäuse (9) angeformt ist.

5. 1. Serie von Ansauganlagen nach einem der Ansprüche 1 bis 4, wobei
2. das den Ansaugtrichter (11) beinhaltende Oberteil des Ansauggehäuses eine Querwand (12) aufweist, die zusammen mit Stegen (10) im Unterteil separate Ansaugkanäle für jeweils jeder Zylinderreihe zugeordnete Abgasturbolader (2, 2') bildet,
2.1 wobei ein Strömungskanal durch eine im Ansaugtrichter (11) angeordnete Absperreinrichtung (13) absperrbar ist.

6. 1. Serie von Ansauganlagen nach einem der Ansprüche 1 bis 4, wobei
2. das Oberteil des Niederdruckladeluftkühlers (22) ebenfalls eine Querwand (24) aufweist,
2.1 wodurch zwei Räume zur Aufnahme separater Kühlelemente entstehen,
2.2 und wobei die Querwand (24) zusammen mit Stegen (10) im Unterteil des Gehäuses separate Strömungskanäle für jeweils jeder Zylinderreihe zugeordnete Abgasturboladergruppen (3, 3'', 3', 3''') bildet.

7. 1. Serie von Ansauganlagen nach einem der Ansprüche 1 bis 6, wobei
2. das Luftsammelgehäuse (9) im Bereich des Ladeluftkühlers (15) oben offen ausgebildet ist, und das Gehäuse (16) des Ladeluftkühlers (15) den Deckel bildet.

8. 1. Serie von Ansauganlagen nach einem der Ansprüche 1 bis 7, wobei
2. dem Ladeluftkühler (15) und dem Niederdruckladeluftkühler (22) die Ladeluft über seitliche obenliegende Einlässe der Gehäuse (16, 23) zugeführt wird.

9. 1. Serie von Ansauganlagen nach einem der Ansprüche 1 bis 8, wobei
2. das Luftsammelgehäuse (9) über separate Ansaugstutzen (18) mit den Einlaßkanälen der Zylinderköpfe (19) verbunden ist.

## Claims

1. A series of intake assemblies for an internal-combustion engine (1) for use in single or two-stage forced induction,
1.1 with at least one exhaust-driven turbocharger (2, 2'), an air-charge intercooler (15) and an air manifold housing (9), and also with ducts between the assembly members and to the inlet ducts of the cylinder heads (19),
2. wherein, with two-stage forced induction, the air manifold housing (9) and the ducts between the assembly members are used in the same arrangement as with single-stage forced induction,
3. and wherein, with two-stage forced induction, high-pressure exhaust-driven turbochargers (3, 3') are provided in place of the exhaust-driven turbochargers (2, 2') used in single-stage forced induction,
3.1 and wherein, with two-stage forced induction, low-pressure exhaust-driven turbochargers (3'', 3''') are added,
4. and wherein, with two-stage forced induction, a high-pressure air-charge intercooler is provided in place of the air-charge intercooler (15) used in single-stage forced induction,
5. and wherein, with two-stage forced induction, a low-pressure air-charge intercooler (22) is added,
5.1 wherein the flow housing, which forms the intake housing with the intake funnel (11) in single-stage forced induction, and the housing, which encloses the cooling elements of the low-pressure air-charge intercooler (22) in two-stage forced induction, are each formed with an identical lower part,
5.2 on which, with single-stage forced induction, an upper part with the intake funnel (11) can be mounted,
5.3 and, with two-stage forced induction, a cover with connections for the supply of air charge to the cooling elements inside the housing can be mounted,
5.4 wherein the lower part has the connector branches (7, 7') for diverting the charge air to the compressors (4, 4' and 5, 5') of the exhaust-driven turbochargers (2, 2' and 3, 3'),
5.5 and wherein the lower part is disposed at the same location with single and two-stage forced induction.

2. 1. A series of intake assemblies according to Claim 1, wherein
2. the air manifold housing (9) extends along the internal-combustion engine (1) between two banks of cylinders disposed in a V,
3. and, with single stage forced induction, on the upper side of the air manifold housing (9) the air-charge intercooler (15) and the flow housing are arranged side by side with the intake funnel (11),
3.1 and, with two-stage forced induction, the air-charger intercoolers (15 and 22) are arranged side by side.

3. 1. A series of intake assemblies according to Claim 2,
2. wherein the exhaust-driven turbochargers (2, 2') and the high-pressure exhaust-driven turbochargers (3, 3') are disposed on a narrow side of the air manifold housing (9), and
3. the lower part of the intake housing with the intake funnel (11) and of the low-pressure air-charge intercooler (22) with its connector branches (7, 7') is arranged directly opposite the inlets to the compressors (4, 4' and 5 and 5') of the exhaust-driven turbochargers (2, 2' and 3, 3').

4. 1. A series of intake assemblies according to Claim 1, 2 or 3, wherein
2. the lower part of the flow housing forming the intake housing or the lower part for the housing of the low-pressure air-charge intercooler (22) is formed on the air manifold housing (9).

5. 1. A series of intake assemblies according to any one of Claims 1 to 4, wherein
2. the upper part of the intake housing containing the intake funnel (11) has a transverse wall (12) which together with webs (10) in the lower part forms separate intake ducts for exhaust-driven turbochargers (2, 2') respectively associated with each bank of cylinders,
2.1 wherein a flow duct can be shut off by an a shut-off device (13) disposed in the intake funnel (11).

6. 1. A series of intake assemblies according to any one of Claims 1 to 4, wherein
2. the upper part of the low-pressure air-charge intercooler (22) also has a transverse wall (24),
2.1 whereby two chambers are formed to accommodate separate cooling elements,
2.2 and wherein the transverse wall (24) together with webs (10) in the lower part of the housing forms separate flow channels for respective exhaust-driven turbocharger groups (3, 3'', 3', 3''') associated with each bank of cylinders.

7. 1. A series of intake assemblies according to any one of Claims 1 to 6, wherein
2. the air manifold housing (9) is designed to be upwardly open in the vicinity of the air-charge intercooler (15), and the housing (16) of the air-charge intercooler (15) forms the cover.

8. 1. A series of intake assemblies according to any one of Claims 1 to 7, wherein
2. the air charge is fed to the air-charge intercooler (15) and to the low-pressure air-charge intercooler (22) via upper lateral inlets to the housings (16, 23).

9. 1. A series of intake assemblies according to any one of Claims 1 to 8, wherein
2. the air manifold housing (9) is connected via separate intake connectors (18) with the inlet ducts to the cylinder heads (19).

## Revendications

1. Série de dispositifs d'aspiration pour moteur (1) à combustion interne, en vue d'une utilisation en régime de suralimentation en un étage ou en deux étages,
1.1 comprenant au moins un turbocompresseur (2, 2') à gaz d'échappement, un refroidisseur (15) d'air de suralimentation et un carter (9) collecteur d'air, ainsi que des conduits situés entre les parties de l'installation et gagnant les canaux d'admission des culasses (19) des cylindres,
2. le carter (9) collecteur d'air, ainsi que les conduits situés entre les parties de l'installation, étant utilisés, lors d'une suralimentation en deux étages, selon le même agencement que lors d'une suralimentation en un étage,
3. les turbocompresseurs (3, 3') à gaz d'échappement de haute pression étant disposés, lors d'une suralimentation en deux étages, à l'emplacement des turbocompresseurs (2, 2') à gaz d'échappement utilisés lors d'une suralimentation en un étage,
3.1 des turbocompresseurs (3'', 3''') à gaz d'échappement de basse pression étant ajoutés lors d'une suralimentation en deux étages,
4. le refroidisseur d'air de suralimentation à haute pression étant disposé, lors d'une suralimentation en deux étages, à l'emplacement du refroidisseur (15) d'air de suralimentation utilisé lors d'une suralimentation en un étage,
5. un refroidisseur (22) d'air de suralimentation à basse pression étant ajouté lors d'une suralimentation en deux étages,
5.1 le carter d'écoulement, formant le carter d'aspiration avec la coiffe infundibuliforme d'aspiration (11) lors d'une suralimentation en un étage, et le boîtier renfermant, lors d'une suralimentation en deux étages, les éléments de refroidissement du refroidisseur (22) d'air de suralimentation à basse pression, étant respectivement pourvus d'une partie inférieure identique,
5.2 sur laquelle une partie supérieure, munie de la coiffe infundibuliforme d'aspiration (11), peut être placée lors d'une suralimentation en un étage
5.3 et sur laquelle, lors d'une suralimentation en deux étages, peut être placé un couvercle muni de raccords pour délivrer l'air de suralimentation aux éléments de refroidissement à l'intérieur du boîtier,
5.4 la partie inférieure présentant les manchons de raccordement (7, 7') pour dériver l'air de suralimentation vers les compresseurs (4, 4', respectivement 5, 5') des turbocompresseurs (2, 2', respectivement 3, 3') à gaz d'échappement,
5.5 et la partie inférieure étant située au même emplacement lors d'une suralimentation en un étage et en deux étages.

2. Série de dispositifs d'aspiration selon la revendication 1, dans laquelle
1. le carter (9) collecteur d'air s'étend, le long du moteur (1) à combustion interne, entre deux rangées de cylindres agencées en V,
2. et, lors d'une suralimentation en un étage, le refroidisseur (15) d'air de suralimentation et le carter d'écoulement muni de la coiffe infundibuliforme d'aspiration (11) sont disposés, en juxtaposition, sur la face supérieure du carter (9) collecteur d'air,
2.1 les refroidisseurs (15 et 22) d'air de suralimentation étant disposés en juxtaposition lors d'une suralimentation en deux étages.

3. Série de dispositifs d'aspiration selon la revendication 2,
1. dans laquelle les turbocompresseurs (2, 2') à gaz d'échappement ou, respectivement, les turbocompresseurs (3, 3') à gaz d'échappement de haute pression sont disposés sur un petit côté du carter (9) collecteur d'air, et
2. la partie inférieure du carter d'aspiration présentant la coiffe infundibuliforme d'aspiration (11) ou, respectivement, du refroidisseur (22) d'air de suralimentation à basse pression, présentant ses manchons de raccordement (7, 7'), est directement disposée en vis-à-vis des admissions des compresseurs (4, 4', respectivement 5, 5') des turbocompresseurs (2, 2', respectivement 3, 3') à gaz d'échappement.

4. Série de dispositifs d'aspiration selon la revendication 1, 2 ou 3, dans laquelle
1. la partie inférieure du carter d'écoulement formant le carter d'aspiration ou, respectivement, la partie inférieure destinée au boîtier du refroidisseur (22) d'air de suralimentation à basse pression, fait corps avec le carter (9) collecteur d'air.

5. Série de dispositifs d'aspiration selon l'une des revendications 1 à 4, dans laquelle
1. la partie supérieure du carter d'aspiration, comprenant la coiffe infundibuliforme d'aspiration (11), présente une cloison transversale (12) qui matérialise, en association avec des membrures (10) dans la partie inférieure, des canaux distincts d'aspiration pour des turbocompresseurs (2, 2') à gaz d'échappement respectivement affectés à chaque rangée de cylindres,
1.1 un canal de circulation pouvant être isolé par un système d'isolement (13) intégré dans la coiffe infundibuliforme d'aspiration (11).

6. Série de dispositifs d'aspiration selon l'une des revendications 1 à 4, dans laquelle
1. la partie supérieure du refroidisseur (22) d'air de suralimentation à basse pression présente, elle aussi, une cloison transversale (24)
1.1 donnant ainsi naissance à deux compartiments conçus pour recevoir des éléments distincts de refroidissement,
1.2 la cloison transversale (24) matérialisant, en association avec des membrures (10) dans la partie inférieure du boîtier, des canaux distincts de circulation pour des groupes (3, 3'', 3', 3''') de turbocompresseurs à gaz d'échappement respectivement affectés à chaque rangée de cylindres.

7. Série de dispositifs d'aspiration selon l'une des revendications 1 à 6, dans laquelle
1. le carter (9) collecteur d'air est réalisé ouvert en partie haute dans la région du refroidisseur (15) d'air de suralimentation, et le boîtier (16) du refroidissesur (15) d'air de suralimentation forme le couvercle.

8. Série de dispositifs d'aspiration selon l'une des revendications 1 à 7, dans laquelle
1. l'air de suralimentation est délivré au refroidisseur (15) d'air de suralimentation, et au refroidisseur (22) d'air de suralimentation à basse pression, par l'intermédiaire d'admissions latérales occupant une position haute dans les boîtiers (16, 23).

9. Série de dispositifs d'aspiration selon l'une des revendications 1 à 8, dans laquelle
1. le carter (9) collecteur d'air est raccordé aux canaux d'admission des culasses (19) des cylindres par l'intermédiaire de manchons distincts d'aspiration (18).
